(19) **Europäisches Patentamt / European Patent Office / Office européen des brevets**

(11) **EP 1 170 643 B1**

(12) **EUROPÄISCHE PATENTSCHRIFT**

(45) Veröffentlichungstag und Bekanntmachung des Hinweises auf die Patenterteilung:
**01.04.2009  Patentblatt 2009/14**

(51) Int Cl.:
*G05B 19/042* (2006.01)     *G05B 19/414* (2006.01)
*H04L 7/02* (2006.01)       *G01D 5/14* (2006.01)

(21) Anmeldenummer: **01113589.4**

(22) Anmeldetag: **15.06.2001**

(54) **Verfahren und Vorrichtung zur seriellen Datenübertragung zwischen einem Positionsmesssystem und einer Verarbeitungseinheit**

Method and device for serial data transmission between a position measuring system and a processing unit

Méthode et dispositif de transmission sérielle de données entre un système de mesure de position et une unité de traitement

(84) Benannte Vertragsstaaten:
**AT BE CH CY DE DK ES FI FR GB GR IE IT LI LU MC NL PT SE TR**

(30) Priorität: **21.06.2000  DE 10030357**

(43) Veröffentlichungstag der Anmeldung:
**09.01.2002  Patentblatt 2002/02**

(73) Patentinhaber: **Dr. Johannes Heidenhain GmbH 83292 Traunreut (DE)**

(72) Erfinder:
• **Wastlhuber, Robert**
  **84518 Garching/Alz (DE)**
• **Bratzdrum, Erwin**
  **83359 Hallabruck (DE)**

(56) Entgegenhaltungen:
| | |
|---|---|
| WO-A-98/01724 | DE-A1- 19 714 152 |
| DE-A1- 19 811 095 | DE-A1- 19 815 647 |
| DE-C1- 19 513 692 | US-A- 5 687 103 |

**Beschreibung**

Die vorliegende Erfindung betrifft ein Verfahren sowie eine Vorrichtung zur seriellen Datenübertragung zwischen einem Positionsmesssystem und einer Verarbeitungeinheit.

Im Rahmen einer seriellen Datenübertragung zwischen einem Positionsmesssystem und einer nachgeordneten Verarbeitungseinheit, z.B. einer numerischen Werkzeugmaschinensteuerung, resultieren bestimmte Anforderungen an die gewählte Datenübertragung. Insbesondere im Fall einer hochdynamischen Regelung auf Basis der übertragenen Positionsdaten ist hierbei erforderlich, dass eine entsprechende Datenübertragung möglichst interrupt-fähig ist. Dies bedeutet, dass es zu jedem Zeitpunkt der Datenübertragung möglich sein sollte, aktuelle Positionsdaten vom Positionsmesssystem über ein entsprechendes Positionsdaten-Anforderungssignal anzufordern und nach einer möglichst kurzen Zeit in der Verarbeitungseinheit zur Verfügung zu stellen. Je nach zeitlicher Lage des Positionsdaten-Anforderungssignales in Bezug auf das gerade übertragene Datenwort zum Zeitpunkt der Anforderung ist jedoch nicht gewährleistet, dass die Erfassung des aktuellen Positionsmesswertes bzw. der Positionsdaten zu einem definierten Zeitpunkt erfolgt. Es liegt vielmehr eine zeitliche Unsicherheit in Bezug auf den Positions-Erfassungszeitpunkt vor, die der Dauer der Übertragung des jeweiligen Datenwortes entspricht. Dies ist umso kritischer, wenn mit einem derartigen Positionsdaten-Anforderungssignal die aktuellen Positionsdaten einer Vielzahl von Positionsmesssystemen abgefragt werden sollen. Es ist dabei nicht a priori sichergestellt, dass tatsächlich alle angesprochenen Positionsmesssysteme zum gleichen Zeitpunkt nach einem entsprechenden Anforderungssignal die aktuellen Positionsdaten erfassen respektive im Positionsmesssystem einspeichern.

Aus der DE 198 15 647 A1 ist ein Verfahren sowie eine Vorrichtung zur Synchronisation einer lokalen Zeitbasis in einem lokalen technischen System auf eine zentrale Zeitbasis in einem zentralen technischen System bekannt. Es werden hierzu Zeittelegramme zwischen den verschiedenen Zeitbasen übertragen und über die Absende- und Empfangszeitpunkte derselben Zeitabweichungen bestimmt, die zur Synchronisation der lokalen Zeitbasis ausgewertet werden. Hinweise zur Lösung der eingangs diskutierten Problematik bzgl. der zeitlichen Unsicherheit eines Positions-Erfassungszeitpunkts sind dieser Druckschrift nicht zu entnehmen.

Aufgabe der vorliegenden Erfindung ist es daher, ein Verfahren sowie eine Vorrichtung zur seriellen Datenübertragung zwischen einem Positionsmesssystem und einer Verarbeitungseinheit anzugeben, bei dem sichergestellt ist, dass die Erfassung von Positionsdaten im Positionsmesssystem stets zu definierten Zeitpunkten erfolgt.

Diese Aufgabe wird gelöst durch ein Verfahren mit den Merkmalen des Anspruches 1.

Vorteilhafte Ausführungsformen des erfindungsgemäßen Verfahrens ergeben sich aus den Maßnahmen, die in den von Anspruch 1 abhängigen Patentansprüchen aufgeführt sind.

Ferner wird die oben aufgeführte Aufgabe durch eine Vorrichtung mit den Merkmalen des Anspruches 11 gelöst.

Vorteilhafte Ausführungsformen der erfindungsgemäßen Vorrichtung ergeben sich aus den Maßnahmen, die in den von Anspruch 11 abhängigen Patentansprüchen aufgeführt sind.

Die erfindungsgemäßen Maßnahmen gewährleisten nunmehr, dass insbesondere auch im Fall der angeforderten Positionsdatenerfassung während der laufenden Datenübertragung stets zu definierten Zeitpunkten die Positionsdaten bzw. Positionsmesswerte im Positionsmesssystem erfasst respektive eingespeichert werden. Dies ist auch dann gewährleistet, wenn etwa eine Vielzahl von Positionsmesssystemen gleichzeitig abgefragt werden sollen.

Über die nachfolgend detailliert erläuterte Erfindung kann somit sichergestellt werden, dass zwischen den Zeitpunkten, an denen z.B. ein nachgeordneter Lageregelungskreis jeweils Positionsdaten erfasst, immer definierte, äquidistante Zeitintervalle liegen. Diese Zeitintervalle können hierbei durch den jeweiligen Lageregelungskreis vorgegeben werden und hängen nicht vom vorgegebenen Übertragungsprotokoll ab. Es resultiert letztlich eine Unabhängigkeit der Lageregelungs-Zykluszeiten von der Art und Weise der Datenübertragung.

Ferner ist als Vorteil der vorliegenden Erfindung zu erwähnen, dass sich die vorgeschlagenen Maßnahmen auch in Verbindung mit verschiedenartigen Positionsdaten-Anforderungssignalen realisieren lassen. So können z.B. Positionsdaten-Anforderungssignale zur Anforderung von Positionsdaten für die Lageregelung bzw. für die Digitalisierung einer mittels eines Tastsystems abgetasteten Werkstückkontur vorgesehen sein; für beide Arten von Positionsdaten-Anforderungssignalen gibt es unterschiedliche Abarbeitungsprioritäten.

Weitere Vorteile sowie Einzelheiten der vorliegenden Erfindung ergeben sich aus der nachfolgenden Beschreibung der beiliegenden Figuren.

Dabei zeigt

Figur 1a      eine zeitlichen Ausschnitt aus einem Übertra- gungsprotokoll der zwischen einer Verarbei- tungseinheit und einem Positionsmesssystem übertragenen Daten;

Figur 1b und1c    jeweils den zeitlichen Ablauf der Ereignisse nach dem Eintreffen eines Positionsdaten-Anforde- rungssignales;

Figur 2      eine stark schematisierte Darstellung einer mög- lichen Ausführungsform der erfindungsgemäßen Vorrichtung.

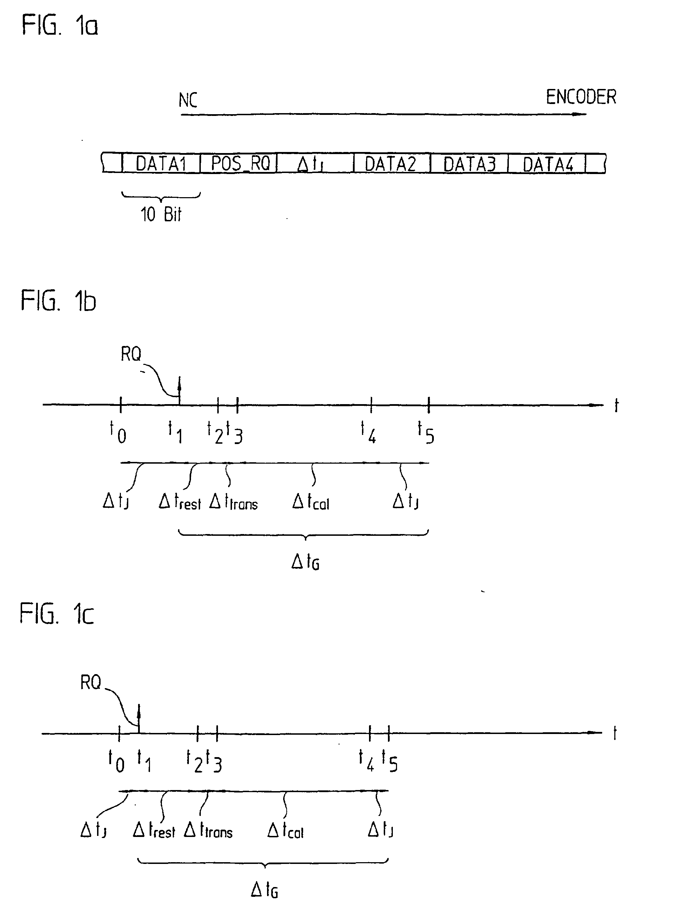

Anhand der Figuren 1a -1c sei nachfolgend an zwei Beispielen die vorliegende Erfindung erläutert. Figur 1a zeigt hierbei einen zeitlichen Ausschnitt des Übertragungsprotokolls zwischen einer Verarbeitungseinheit (NC) und einem Positionsmesssystem (ENCODER), d.h. die in einem bestimmten Zeitintervall von der Verarbeitungseinheit an das Positionsmesssystem übertragenen Daten. Nicht dargestellt ist der Datentransfer in der anderen Richtung, d.h. vom Positionsmesssystem zur Verarbeitungseinheit.

In Bezug auf die konkrete Auslegung einer entsprechenden Schnittstelle gibt es im Rahmen der vorliegenden Erfindung verschiedene Möglichkeiten; So kann in einer vorteilhaften Ausführungsform etwa vorgesehen sein, für jede Übertragungsrichtung einen separaten Datenkanal zu nutzen. Es wird dabei ein erster Datenkanal für die Datenübertragung von der Verarbeitungseinheit zum Positionsmesssystem verwendet; ein zweiter Datenkanal dient zur Datenübertragung vom Positionsmesssystem zur Verarbeitungseinheit.

Beim verwendeten Positionsmesssystem kann es sich um ein bekanntes inkrementales oder absolutes Positionsmesssystem an einer Werkzeugmaschine handeln, in dem die jeweiligen Positionsdaten in üblicher Art und Weise zur seriellen Übertragung aufbereitet werden. Die Positionsdaten und ggf. weitere Daten werden dann als digitale Datenwörter DATA1 - DATA4 oder als Datenpakete, bestehend aus einer Vielzahl derartiger Datenwörter DATAn, vom Positionsmesssystem an die Verarbeitungseinheit übertragen.

Die Verarbeitungseinheit ist als numerische Werkzeugmaschinensteuerung ausgebildet. Ebenso erfolgt eine Übertragung von Daten in Form digitaler Datenwörter DATA bzw. in Form entsprechender Datenpakete von der Verarbeitungseinheit zum Positionsmesssystem, d.h. es ist eine bidirektionale Kommunikation zwischen dem Positionsmesssystem und der Verarbeitungseinheit vorgesehen. Neben den eigentlich zu übertragenden Daten wie Positionsdaten, Parameter-Daten usw. ist selbstverständlich auch noch die Übertragung von Befehlen etc. möglich.

Im vorliegenden Beispiel werden zwischen dem Positionsmesssystem und der Verarbeitungseinheit digitale Datenwörter DATA1 - DATA4 mit einer Wortlänge von 10 Bit ausgetauscht; selbstverständlich können im Rahmen der vorliegenden Erfindung aber auch andere Wortlängen vorgesehen werden. Anhand der Figuren 1a und 1b sei nunmehr der Fall erläutert, dass während der Übertragung eines Datenwortes DATA1 von der Verarbeitungseinheit zum Positionsmesssystem, die zum Zeitpunkt $t_0$ beginnt, ein Positionsdaten-Anforderungssignal RQ in der Verarbeitungseinheit eintrifft. Beispielsweise kann mittels eines entsprechenden Positionsdaten-Anforderungssignales RQ ein Lageregelungskreis aktuelle Positionsdaten anfordern. Über ein derartiges Positionsdaten-Anforderungssignal RQ wird im vorliegenden Beispiel zum Zeitpunkt $t_1$ die möglichst umgehende Übertragung der aktuellen Positionsdaten vom Positionsmesssystem angefordert. Grundsätzlich ist a priori nicht festgelegt, zu welchem Zeitpunkt letztlich ein derartiges Positionsdaten-Anforderungssignal RQ eintrifft; es ist demzufolge auch die relative zeitliche Lage des Positionsdaten-Anforderungssignales RQ in Bezug auf das gerade übertragene Datenwort DATA1 nicht bekannt. Ohne weitere Maßnahmen läge daher eine zeitliche Unsicherheit $\Delta t$ bezüglich des späteren Positionsdaten-Erfassungszeitpunktes vor, die der benötigten Zeit zur Übertragung eines Datenwortes DATA1 entspricht. Im Fall eines 10 Bit langen Datenwortes DATA1 wie im vorliegenden Beispiel und einer Datenübertragungsrate von 30 MBit/sec entspräche dies einer zeitlichen Unsicherheit $\Delta t = 333ns$. Auf Seiten der Verarbeitungseinheit hätte eine derartige Unsicherheit dann wiederum eine entsprechende Unsicherheit bei der Signal-Weiterverarbeitung zur Folge.

Um diese Unsicherheit auszuschalten wird daher als wesentliche erfindungsgemäße Maßnahme vorgesehen, ein Lagesignal zu ermitteln bzw. zu bestimmen, das die zeitliche Relativlage des Positionsdaten-Anforderungssignales RQ zum gerade übertragenen Datenwort DATA1 oder ggf. Datenpaket beschreibt. Im vorliegenden Beispiel wird als entsprechendes Lagesignal die Zeitdifferenz $\Delta t_J$ zwischen dem Beginn der Übertragung des Datenwortes DATA1 und dem Eintreffen des Positionsdaten-Anforderungssignales RQ bestimmt, d.h. die Zeit zwischen den beiden Zeitpunkten $t_0$ und $t_1$. Eine derartige Zeitbestimmung kann beispielsweise mithilfe eines geeigneten Zählers erfolgen, der beginnend mit der Übertragung des Datenwortes DATA1 ab $t_0$ in definierten Zeitintervallen $\Delta t_Z$ hochzählt und derart die Zeitdifferenz $\Delta t_J = Z * \Delta t_Z$ bestimmt mit $Z = Z(t_1) - Z(t_0)$, d.h. $Z(t_n)$ ist jeweils der Zählerstand zum Zeitpunkt $t_n$. Zu Beginn der Übertragung eines jeden Datenwortes muss demzufolge sichergestellt sein, dass ab einem bestimmten bzw. definierten Start-Zählerwert $Z(t_0)$, beispielsweise $Z(t_0) = 0$ oder $Z(t_0) = 15$, gezählt wird. Nach der Übertragung eines jeden digitalen Datenwortes bzw. vor der Übertragung eines jeden digitalen Datenwortes ist demzufolge der Zähler wieder auf den entsprechenden Start-Zählerwert $Z(t_0)$ zurückzusetzen. Grundsätzlich könnte dabei selbstverständlich auch ein Herunterzählen von einem geeigneten Start-Zählerwert $Z(t_0)$ erfolgen.

Alternativ hierzu könnte ein entsprechendes Lagesignal etwa auch den zeitlichen Abstand zwischen $t_1$ und $t_2$ angeben, d.h. den zeitlichen Abstand zwischen dem Eintreffen des Positionsdaten-Anforderungssignales RQ und der Beendigung der Übertragung des Datenwortes DATA1. Ebenso könnte die Relativlage des Signales RQ zu einem beliebig gewählten Zeitpunkt während der Übertragung des Datenwortes DATA1 bestimmt werden etc..

Sobald zum Zeitpunkt $t_2$ die Übertragung des aktuellen Datenwortes DATA1 beendet ist, wird von der Verarbeitungseinheit nachfolgend ein Positionsdaten-Anforderungsbefehl POS_RQ als digitales Datenwort an das Positionsmesssystem übertragen, mit dem das Erfassen der aktuellen Positionsdaten im Positionsmesssystem angefordert wird. Auch dieses Datenwort weist wie alle übertragenen digitalen Datenwörter dieses Beispiels wiederum eine Wortlänge von 10 Bit auf.

An die Übertragung des Positionsdaten-Anforderungsbefehles POS_RQ schließt sich die Übertragung des vorher auf Seiten der Positionsmesseinrichtung ermittelten Lagesignales bzw. der Zeitdifferenz $\Delta t_J$ von der Verarbeitungseinheit an das Positionsmesssystem an. Die ermittelte Zeitdifferenz $\Delta t_J$ wird ebenfalls wieder als digitales 10-Bit-Datenwort seriell übertragen.

Mit Hilfe des Zeitdiagrammes in Figur 1b sei nunmehr die Verarbeitung der verschiedenen übertragenen Daten auf Seiten des Positionsmesssystems in einem ersten Fall erläutert.

Zum Zeitpunkt $t_2$ ist die Übertragung des Datenwortes DATA1 an das Positionsmesssystem beendet, während dessen Übertragung zum Zeitpunkt $t_1$ wie beschrieben ein Positionsdaten-Anforderungssignal RQ eintraf. Das Zeitintervall zwischen dem Zeitpunkt $t_1$ und dem Ende der Übertragung des Datenwortes DATA1 zum Zeitpunkt $t_2$ wird in den Figuren 1b und 1c mit $\Delta t_{rest}$ bezeichnet. Das an $t_2$ anschließende Zeitintervall $\Delta t_{trans}$ ($t_2$; $t_3$) vor der weiteren Signalverarbeitung im Positionsmesssystem ist durch die Dauer der Übertragung der beiden digitalen Datenwörter bzgl. des Positionsdaten-Anforderungsbefehles POS_RQ und der Zeitdifferenz $\Delta t_J$ bedingt. Die Größe des Zeitintervalles $\Delta t_{trans}$ ist hierbei abhängig von der Länge der jeweiligen Übertragungsstrecke zwischen dem Positionsmesssystem und der Verarbeitungseinheit.

An den Zeitpunkt $t_3$ nach der erfolgten Übertragung des Positionsdaten-Anforderungsbefehles POS_RQ und der Zeitdifferenz $\Delta t_J$ schließt sich auf Seiten des Positionsmesssystems ein Zeitintervall $\Delta t_{cal}$ zwischen den Zeitpunkten $t_3$ und $t_4$ an. Das Zeitintervall $\Delta t_{cal}$ wird für die Verarbeitung der übertragenen Datenwörter bzgl. des Positionsdaten-Anforderungsbefehles POS_RQ und der Zeitdifferenz $\Delta t_J$ auf Seiten des Positionsmesssystems benötigt.

Prinzipiell könnten nach der entsprechenden Verarbeitung der empfangenen Daten nunmehr auf Seiten des Positionsmesssystems umgehend die aktuellen Positionsdaten erfasst bzw. eingespeichert werden. Aufgrund der oben erwähnten zeitlichen Unsicherheit $\Delta t$ bzgl. des Zeitpunktes des Eintreffens des Positionsdaten-Anforderungssignales RQ wäre dabei aber nicht sichergestellt, dass ein eindeutig definierter Zeitpunkt zur Positionsdaten-Erfassung ab dem Zeitpunkt $t_1$ vorliegt.

Es wird daher die erfindungsgemäß ermittelte Zeitdifferenz $\Delta t_J$ ab dem Zeitpunkt $t_4$ abgewartet, bis letztlich die aktuellen Positionsdaten im Positionsmesssystem erfasst bzw. eingespeichert werden. Zwischen dem Zeitpunkt des Eintreffens des Positionsdaten-Anforderungssignales RQ im Zeitpunkt $t_1$ und dem Erfassungszeitpunkt $t_5$ liegt damit eine definierte, konstante Gesamtzeit $\Delta t_G$.

Die Gesamtzeit $\Delta t_G$ setzt sich im Beispiel somit wie erläutert additiv aus

- der verbleibenden Übertragungszeit $\Delta t_{rest}$ des gerade übertragenen Datenwortes DATA1,
- der erforderlichen Übertragungszeit $\Delta t_{trans}$ für die Übertragung des Positionsdaten-Anforderungsbefehles POS_RQ und die Übertragung der Zeitdifferenz $\Delta t_J$,
- der benötigten Verarbeitungszeit $\Delta t_{cal}$ für die Auswertung des Positionsdaten-Anforderungsbefehles POS_RQ und der übertragenen Zeitdifferenz $\Delta t_J$ sowie
- der übertragenen Zeitdifferenz $\Delta t_J$ zusammen, d.h.

$$\Delta t_G = \Delta t_{rest} + \Delta t_{trans} + \Delta t_{cal} + \Delta t_J.$$

Im Positionsmesssystem ist in einer möglichen Ausführungsform ebenfalls ein Zähler vorgesehen, der ab dem Zeitpunkt $t_4$, d.h. ab dem Zeitpunkt, an dem die Auswertung des Positionsdaten-Anforderungsbefehles POS_RQ und der übertragenen Zeitdifferenz $\Delta t_J$ beendet ist, um die Zeitdifferenz $\Delta t_J$ bis zum Zeitpunkt $t_5$ hoch zählt. Zum Zeitpunkt $t_5$ erfolgt dann wie erläutert das Erfassen der aktuellen Positionsdaten. Ebenso ist an dieser Stelle selbstverständlich auch alternativ ein Herunterzählen des entsprechenden Zählers oder dgl. möglich.

Auch der Fall unterschiedlich langer Übertragungsstrecken zwischen verschiedenen Positionsmesssystemen und einer zentralen Verarbeitungseinheit lässt sich im Rahmen der vorliegenden Erfindung berücksichtigen. Unterschiedlich lange Übertragungsstrekken hätten etwa unterschiedliche Übertragungszeiten $\Delta t_{trans}$ und damit auch wiederum unerwünscht variierende Gesamtzeiten $\Delta t_G$ zur Folge. In einem solchen Fall wäre vor der Inbetriebnahme des Systems eine Bestimmung der verschiedenen Übertragungszeiten $\Delta t_{trans}$ für die verschiedenen Positionsmesssysteme mit variierenden Übertragungsstrecken erforderlich. Im eigentlichen Betrieb müsste dann für alle eingesetzten Positionsmesssysteme eine Übertragungszeit $\Delta t_{trans}$ berücksichtigt werden, die sich an der maximalen Übertragungszeit $\Delta t_{trans}$ für die längste Übertragungsstrecke orientiert. Dies könnte beispielsweise durch einen entsprechenden Start-Zählerwert im Positionsmesssystem erfolgen, der spezifisch bzw. abhängig von der Länge der Übertragungsstrecke für jedes Positionsmesssystem ermittelt und voreingestellt wird. Auf diese Art und Weise wäre wiederum die erwünschte gleichbleibende Gesamtzeit $\Delta t_G$ für alle verschiedenen Positionsmesssysteme gewährleistet.

Entscheidend für die vorliegende Erfindung ist nunmehr, dass auch im Fall des Eintreffens des Positionsdaten-Anforderungssignales RQ zu einem anderen Zeitpunkt während der Übertragung des Datenwortes DATA1 das Erfassen der aktuellen Positionsdaten zu einem definierten Zeitpunkt erfolgt, nämlich ebenfalls zu einem Zeitpunkt, der durch die oben erläuterte Gesamtzeit $\Delta t_G$ auf den Zeitpunkt des Eintreffens des Positionsdaten-Anforderungssignales RQ folgt. Dieser Fall ist in Figur 1c veranschaulicht und sei nachfolgend kurz erläutert.

Im Unterschied zum vorherigen Beispiel trifft nunmehr das Positionsdaten-Anforderungssignal RQ während der Übertragung des Datenwortes DATA1 zu einem etwas früheren Zeitpunkt $t_1$ ein. Wie oben erfolgt wiederum die Bestimmung der Zeitdifferenz $\Delta t_J$ zwischen dem Anfang der Übertragung des Datenwortes DATA1 und dem Zeitpunkt $t_1$. Nach Übertragung des restlichen Datenwortes im Zeitintervall $\Delta t_{rest}$ sowie der beiden Datenwörter bzgl. des Positionsdaten-Anforderungsbefehles POS_RQ und der Zeitdifferenz $\Delta t_J$ wird zum Zeitpunkt $t_5$ wiederum die angeforderte Position auf Seiten des Positionsmesssystems erfasst. Nach Beendigung der Übertragung der verschiedenen Datenwörter und der hierzu benötigten Zeit $\Delta t_{trans}$ wird die Zeit $\Delta t_{cal}$ zu Verarbeitung der empfangenen Daten benötigt und erfindungsgemäß die Zeitdifferenz $\Delta t_J$ abgewartet, ehe dann wie oben die aktuelle Position zum Zeitpunkt $t_5$ eingespeichert wird. Die Gesamtzeit $\Delta t_G$ zwischen dem Eintreffen des Positionsdaten-Anforderungssignales RQ zum Zeitpunkt $t_1$ und dem Erfassungszeitpunkt $t_5$ entspricht aufgrund des erfindungsgemäßen Vorgehens nunmehr derjenigen Gesamtzeit $\Delta t_G$, die auch im vorherigen Fall zwischen $t_1$ und $t_5$ lag. Es ist somit gewährleistet, dass auf jeden Fall zu einem definierten, bekannten Zeitpunkt ab dem Eintreffen eines Positionsdaten-Anforderungssignales RQ die Erfassung der aktuellen Positionsdaten erfolgt. Die zeitliche Unsicherheit $\Delta t$ aufgrund der ursprünglich nicht bekannten zeitlichen Lage des Positionsdaten-Anforderungssignales RQ in Bezug auf das gerade übertragene Datenwort DATA1 ist somit kompensiert.

Im Rahmen der vorliegenden Erfindung ist neben der Verarbeitung von Positionsdaten-Anforderungssignalen RQ, mit denen schnellstmöglich aktuelle Positionsdaten für eine Lageregelung angefordert werden, auch die Verarbeitung von Positionsdaten-Anforderungssignalen RQ' möglich, mit denen beispielsweise Positionsdaten für die Digitalisierung einer abgetasteten Werkstückkontur vom Positionmesssystem angefordert werden. Es können somit Positionsdaten zur Verarbeitung in der Verarbeitungseinheit mit bestimmten Abarbeitungsprioritäten vom Positionsmesssystem angefordert werden. Die Digitalisierung einer Werkstückkontur erfolgt üblicherweise mit Hilfe eines Tastsystems, das die jeweilige Werkstückkontur abtastet und im Fall eines erzeugten Antastsignales die aktuellen Positionsdaten des Tastsystems an die Verarbeitungseinheit übermittelt, welche letztlich über das Positionsmesssystem bestimmt werden. Während die Positionsdaten für die Lageregelung insbesondere im Fall einer hochdynamischen Regelung äußerst schnell zur Verfügung stehen müssen, ist eine Weiterverarbeitung der Positionsdaten zur Digitalisierung einer Werkstückkontur weniger zeitkritisch. Aus diesem Grund kann vorgesehen werden, mehrere Positionsdaten-Anforderungssignale RQ vorzusehen, denen unterschiedliche Abarbeitungsprioritäten zugeordnet sind. So ist beispielsweise ein erstes Positionsdaten-Anforderungssignal RQ vorgesehen, das mit höchster Abarbeitungspriorität eine Übertragung von Positionsdaten an die Verarbeitungseinheit veranlasst, die dort zur Positions- oder Lageregelung verwendet werden. Des Weiteren existiert mindestens ein zweites Positionsdaten-Anforderungssignal RQ', das mit niedrigerer Abarbeitungspriorität eine Übertragung der aktuellen Positionsdaten an die Verarbeitungseinheit veranlasst, die dann dort zur Digitalisierung einer Werkstückkontur verwendet werden.

Die den verschiedenen Positionsdaten-Anforderungssignalen RQ, RQ' zugewiesenen Abarbeitungsprioritäten haben zur Folge, dass derart eine nochmalige Prioritäts-Differenzierung in der Positionsabfrage möglich ist. So kann beispielsweise die gerade laufende Übertragung von Positionsdaten zur Verarbeitungseinheit unterbrochen werden, die dort zur Digitalisierung benötigt werden und mit dem niedrigprioren Positionsdaten-Anforderungssignal RQ' angefordert wurden. Die Unterbrechung erfolgt hierbei durch das entsprechende Positionsdaten-Anforderungssignal RQ, das die höchste Abarbeitungspriorität aufweist und eine umgehende Übertragung von Positionsdaten für die Positionsregelung in der Verarbeitungseinheit veranlasst. Selbstverständlich können auch mehr als zwei Positionsdaten-Anforderungssignale RQ mit entsprechenden Abarbeitungsprioritäten vorgesehen werden usw..

Im Zusammenhang mit der vorliegenden Erfindung haben derartige unterschiedliche Abarbeitungsprioritäten bestimmte Maßnahmen zur Folge. So muss in jedem Fall sichergestellt sein, dass die mit Positionsdaten-Anforderungssignalen RQ einer gemeinsamen Abarbeitungspriorität angeforderten Positionsdaten zu definierten Zeitpunkten erfasst werden bzw. im Fall regelmäßig angeforderter Positionsdaten diese in äquidistanten Zeitintervallen erfasst werden.
Es werden deshalb für die mit geringerer Abarbeitungspriorität abgerufenen Positionsdaten Gesamtzeiten $\Delta t'_G$ festgelegt, die deutlich größer sind als die Gesamtzeit $\Delta t_G$ bei der Abarbeitung des höchstprioren Positionsdaten-Anforderungssignales RQ. Grundsätzlich ist die Gesamtzeit $\Delta t_G$ für die Abarbeitung des höchstprioren Positionsdaten-Anforderungssignales RQ wegen der erforderlichen schnellen Antwort so kurz wie möglich gewählt. Die modifizierte Gesamtzeit $\Delta t'_G$ für niedrigpriorere Positionsdaten-Anforderungssignale ergibt sich somit als Gesamtzeit $\Delta t'_G = \Delta t_G + \Delta t_{prior}$. Die Größe $\Delta t_{prior}$ bzw. die Gesamtzeit $\Delta t'_G$ wird dann beispielsweise für den Positionsdaten-Anforderungssignal RQ' mit der zweithöchsten Abarbeitungspriorität so bemessen, dass innerhalb der vergrößerten Gesamtzeit $\Delta t'_G$ auch ggf. noch die Anforderung eines Positionsdaten-Anforderungssignales RQ mit der höchsten Abarbeitungspriorität abgearbeitet werden kann. Entsprechend wäre die Gesamtzeit $\Delta t'_G$ für ein ggf. vorhandenen Positionsdaten-Anforderungssignales mit dritthöchster Abarbeitungspriorität so groß zu wählen, dass innerhalb dieser Zeit dann wiederum auf jeden Fall die Anforderung eines Positionsdaten-Anforderungssignales RQ' mit der zweithöchsten Abarbeitungspriorität abgearbeitet werden kann usw..

Die entsprechenden Zeiten $\Delta t_G$, $\Delta t'_G$ zwischen dem Eintreffen eines Positionsdaten-Anforderungssignales RQ und dem Erfassen der aktuellen Positionsdaten können wiederum wie oben erläutert mit Hilfe entsprechender Zähler überprüft werden.

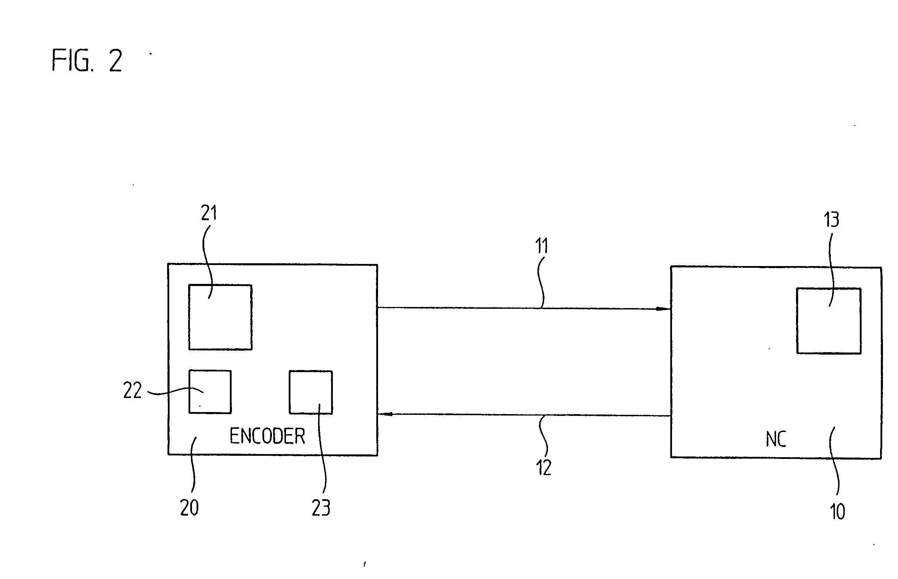

In Figur 2 ist in stark schematisierter Form ein Ausführungsbeispiel der erfindungsgemäßen Vorrichtung dargestellt. Diese umfasst einerseits ein Positionsmesssystem 20, mit dem z.B. laufend die Relativpositionen zweier zueinander beweglicher Teile einer Werkzeugmaschine erfasst werden. Andererseits ist eine Verarbeitungseinheit 10 vorgesehen, etwa ausgebildet als numerische Werkzeugmaschinensteuerung, die die von der Positionsmesseinrichtung gelieferten Daten weiterverarbeitet.

Im dargestellten Beispiel dienen zwei separate Datenkanäle 11, 12 zur bidirektionalen Datenübertragung zwischen der Positionsmesseinrichtung 20 und der Verarbeitungseinheit 10. Über einen ersten Datenkanal 11 erfolgt hierbei die Datenübertragung vom Positionsmesssystem 20 zur Verarbeitungseinheit 10; über einen zweiten Datenkanal 12 werden Daten von der Verarbeitungseinheit 10 zum Positionsmesssystem 20 übertragen.

Auf Seiten des Positionsmesssystems 20 und der Verarbeitungseinheit 10 sind in Fig. 2 lediglich die für die vorliegende Erfindung relevanten Komponenten schematisch angedeutet; ansonsten ist der Aufbau dieser Einheiten dem einschlägigen Fachmann hinlänglich bekannt.

So ist auf Seiten der Verarbeitungseinheit 10 lediglich noch eine Zeitbestimmungseinheit 13 schematisch angedeutet, über die wie oben erläutert im Fall eines eintreffenden Positionsdaten-Anforderungssignales RQ während der Übertragung eines Datenwortes DATA1 die zeitliche Relativlage des Positionsdaten-Anforderungssignales RQ zum gerade übertragenen Datenwort bestimmt wird. Wenn als Lagesignal wie oben beschrieben die Zeitdifferenz $\Delta t_J$ zwischen dem Beginn der Übertragung des Datenwortes DATA1 und dem Eintreffen des Positionsdaten-Anforderungssignales RQ ermittelt wird, so ist die entsprechende Zeitbestimmungseinheit 21 vorzugsweise als Zähler ausgebildet.

Auf Seiten des Positionsmesssystems 20 ist schematisch eine Steuereinheit 21 dargestellt, die die oben erläuterte Signalverarbeitung im Positionsmesssystem 20 abwickelt. Hierzu wird von der Steuereinheit 21 das von der Verarbeitungseinheit 10 übermittelte Lagesignal dahingehend verarbeitet, dass nach einer konstanten Gesamtzeit $\Delta t_G$ nach dem Eingang des Positionsdaten-Anforderungssignales RQ eine Erfassung der aktuellen Positionsdaten im Positionsmesssystem 20 erfolgt. Die Steuereinheit 21 kann hierbei sowohl als Prozessor wie auch als fest-verdrahtete Logikschaltung ausgebildet sein.

Neben der Steuereinheit 21 ist auf Seiten des Positionsmesssystems 20 des Weiteren eine Speichereinheit 22 angedeutet, in der die aktuell erfassten Positionsdaten letztlich abgespeichert werden ehe eine Aufbereitung derselben und Übertragung an die Verarbeitungseinheit erfolgt.

Ferner ist wie oben erläutert auch auf Seiten des Positionsmesssystems 20 eine Zeitbestimmungseinheit 23 vorgesehen, die dazu dient, ab dem Ende der Verarbeitung des übertragenen Positionsdaten-Anforderungsbefehles POS_RQ und der Zeitdifferenz $\Delta t_J$ die Zeitdifferenz $\Delta t_J$ hochzuzählen bis zum Zeitpunkt, an dem die Positionsdaten erfasst werden. Die Zeitbestimmungseinheit 23 ist wie oben angedeutet wiederum als Zähler ausgebildet.

Mit Ausnahme der erläuterten Komponenten weisen die Verarbeitungseinheit 10 sowie das Positionsmesssystem 20 im wesentlichen den üblicherweise bekannten Aufbau auf.

**Patentansprüche**

1. Verfahren zur seriellen Datenübertragung zwischen einem Positionsmesssystem und einer Verarbeitungseinheit, bei dem digitale Datenwörter (DATA1 - DATA4) definierter Länge zwischen der Verarbeitungseinheit (10) und dem Positionsmesssystem (20) übertragen werden und

    - im Fall eines in der Verarbeitungseinheit (10) eintreffenden Positionsdaten-Anforderungssignales (RQ), mit dem ein Lageregelungskreis aktuelle Positionsdaten anfordert, während der Übertragung eines Datenwortes (DATA1) von der Verarbeitungseinheit (10) an das Positionsmesssystem (20) ein Lagesignal bezüglich der zeitlichen Relativlage des Positionsdaten-Anforderungssignales (RQ) zum gerade übertragenen Datenwort (DATA1) bestimmt wird und
    - nachfolgend das ermittelte Lagesignal an das Positionsmesssystem (20) übertragen wird.

2. Verfahren nach Anspruch 1, wobei auf Seiten der Verarbeitungseinheit (10) als Lagesignal die Zeitdifferenz ($\Delta t_J$) zwischen dem Beginn der Übertragung des Datenwortes (DATA1) und dem Eintreffen des Positionsdaten-Anforderungssignales (POS_RQ) bestimmt wird.

3. Verfahren nach Anspruch 1, wobei das Positionsmesssystem (20) mit Hilfe des übermittelten Lagesignales sicherstellt, dass nach einer definierten Gesamtzeit ($\Delta t_G$) nach dem Eingang des Positionsdaten-Anforderungssignales (RQ) die aktuellen Positionsdaten im Positionsmesssystem (20) erfasst werden.

4. Verfahren nach Anspruch 3, wobei die erfassten Positionsdaten auf Seiten des Positionsmesssystems (20) eingespeichert werden.

5. Verfahren nach Anspruch 2 und 3, wobei nach dem Übertragen des Datenwortes (DATA1) ein Positionsdaten-Anforderungsbefehl (POS_RQ) als digitales Datenwort von der Verarbeitungseinheit (10) an das Positionsmesssystem (20) übertragen wird.

6. Verfahren nach Anspruch 5, wobei nach der Übertragung des Positionsdaten-Anforderungsbefehls (POS_RQ) die bestimmte Zeitdifferenz ($\Delta t_J$) von der Verarbeitungseinheit als digitales Datenwort an das Positionsmesssystem (20) übertragen wird.

7. Verfahren nach Anspruch 6, wobei sich die vorgegebene Gesamtzeit ($\Delta t_G$) zwischen dem Eintreffen des Positionsdaten-Anforderungssignales (RQ) und der Erfassung der aktuellen Positionsdaten im Positionsmesssystem (20) additiv aus

    - der verbleibenden Übertragungszeit ($\Delta t_{rest}$) des gerade übertragenen Datenwortes (DATA1),
    - der erforderlichen Übertragungszeit ($\Delta t_{trans}$) für die Übertragung des Positionsdaten-Anforderungsbefehles (POS_RQ) und die Übertragung der Zeitdifferenz ($\Delta t_J$),
    - der benötigten Verarbeitungszeit ($\Delta t_{cal}$) für die Auswertung des Positionsdaten-Anforderungsbefehles (POS_RQ) und der übertragenen Zeitdifferenz ($\Delta t_J$) und
    - der übertragenen Zeitdifferenz ($\Delta t_J$)

zusammensetzt.

8. Verfahren nach Anspruch 2, wobei die Zeitdifferenz ($\Delta t_J$) mit Hilfe eines Zählers bestimmt wird, der jeweils zu Beginn der Übertragung eines digitalen Datenwortes auf einen definierten Start-Zählerwert zurückgesetzt wird.

9. Verfahren nach Anspruch 7, wobei ggf. variierende Übertragungszeiten ($\Delta t_{trans}$) verschiedener Positionsmesssysteme aufgrund unterschiedlich langer Übertragungsstrecken über eine vorgegebene Übertragungszeit ($\Delta t_{trans}$) kompensiert werden, die sich an der maximalen Übertragungszeit ($\Delta t_{trans}$) für die längste Übertragungsstrecke orientiert, so dass wiederum für alle Positionsmesssysteme die gleiche Gesamtzeit ($\Delta t_G$) resultiert.

10. Verfahren nach Anspruch 3, wobei für Positionsdaten-Anforderungssignale (RQ, RQ') mit unterschiedlichen Abarbeitungsprioritäten unterschiedlich lange Gesamtzeiten ($\Delta t_G$) vorgegeben werden und wobei den Positionsdaten-Anforderungssignalen mit höchster Abarbeitungspriorität die kürzeste Gesamtzeit ($\Delta t_G$) zugeordnet wird.

11. Vorrichtung zur seriellen Datenübertragung zwischen einem Positionsmesssystem (20) und einer Verarbeitungseinheit (10), bei dem zwischen der Verarbeitungseinheit (10) und dem Positionsmesssystem (20) eine Übertragung digitaler Datenwörter (DATA1 - DATA4) definierter Länge erfolgt und

    - die Verarbeitungseinheit eine Zeitbestimmungseinheit (13) umfasst, die im Fall eines in der Verarbeitungseinheit (10) eintreffenden Positionsdaten-Anforderungssignales (RQ), mit dem ein Lageregelungskreis aktuelle Positionsdaten anfordert, während der Übertragung eines Datenwortes (DATA1) von der Verarbeitungseinheit (10) an das Positionsmesssystem (20) ein Lagesignal bezüglich der zeitlichen Relativlage des Positionsdaten-Anforderungssignales (RQ) zum gerade übertragenen Datenwort (DATA1) bestimmt und
    - das Positionsmesssystem (20) eine Steuereinheit (21) umfasst, die das von der Verarbeitungseinheit (10) übermittelte Lagesignal dahingehend verarbeitet, dass nach einer konstanten Gesamtzeit ($\Delta t_G$) nach dem Eingang des Positionsdaten-Anforderungssignales (RQ) eine Erfassung der aktuellen Positionsdaten im Positionsmesssystem (20) erfolgt.

12. Vorrichtung nach Anspruch 11, wobei als Lagesignal die Zeitdifferenz ($\Delta t_J$) zwischen dem Beginn der Übertragung des Datenwortes (DATA1) und dem Eintreffen des Positionsdaten-Anforderungssignales (RQ) dient.

13. Vorrichtung nach Anspruch 12, wobei die Zeitbestimmungseinheit (13) auf Seiten der Verarbeitungseinheit (10) als Zähler ausgebildet ist.

14. Vorrichtung nach Anspruch 12, wobei auf Seiten des Positionsmesssystems (20) zur Bestimmung der konstanten Gesamtzeit eine Zeitbestimmungseinheit (23) angeordnet ist.

15. Vorrichtung nach Anspruch 14, wobei die Zeitbestimmungseinheit (23) auf Seiten des Positionsmesssystems (20) als Zähler ausgebildet ist.

16. Vorrichtung nach Anspruch 11, wobei das Positionsmesssystem (20) eine Speichereinheit (22) zum Abspeichern der aktuell erfassten Positionsdaten umfasst.

17. Vorrichtung nach Anspruch 11, wobei die Steuereinheit (21) als Prozessor ausgebildet ist.

18. Vorrichtung nach Anspruch 11, wobei die Steuereinheit (21) als Logikschaltung ausgebildet ist.

**Claims**

1. A method of serial data transmission between a position measuring system and a processing unit, in which digital data words (DATA1 - DATA4) of a defined length are transmitted between the processing unit (10) and the position measuring system (20) and

   - a position signal in relation to the chronological position of the position data request signal (RQ) relative to the data word (DATA1) just transmitted is determined if a position data request signal (RQ) arrives in the processing unit (10), with which a position control circuit requests current position data during transmission of a digital word (DATA1) from the transmission unit (10) to the position measuring system (20) and
   - the determined position signal is then transmitted to the position measuring system (20).

2. The method according to claim 1, wherein the time difference ($\Delta t_J$) between the start of transmission of the data word (DATA1) and the arrival of the position data request signal (POS_RQ) is determined by the processing unit (10) as a position signal.

3. The method according to claim 1, wherein the position measuring system (20) ensures with the help of the transmitted position signal that the current position data are recorded in the position measuring system (20) after a predetermined total time ($\Delta t_G$) following the arrival of the position data request signal (RQ).

4. The method according to claim 3, wherein the recorded position data are stored by the position measuring system (20).

5. The method according to claims 2 and 3, wherein following transmission of the data word (DATA1) a position data request command (POS_RQ) is transmitted by the processing unit (10) as a digital data word to the position measuring system (20).

6. The method according to claim 5, wherein following transmission of the position data request command (POS_RQ) the time difference determined ($\Delta t_J$) is transmitted by the processing unit (10) as a digital data word to the position measuring system (20).

7. The method according to claim 6, wherein the predetermined total time ($\Delta t_G$) between the arrival of the position data request signal (RQ) and the recording of the current position data on the position measuring system (20) is composed of the summation of

   - the remaining transmission time ($\Delta t_{rest}$) of the data word (DATA1) just transmitted,
   - the necessary transmission time ($\Delta t_{trans}$) for transmission of the position data request command (POS_RQ) and transmission of the time difference ($\Delta t_J$),
   - the necessary processing time ($\Delta t_{cal}$) for decoding of the position data request command (POS_RQ) and the transmitted time difference ($\Delta t_J$) and
   - the transmitted time difference ($\Delta t_J$).

8. The method according to claim 2, wherein the time difference ($\Delta t_J$) is determined with the help of a counter, which is reset to a defined start counter value each time transmission of a digital data word begins.

9. The method according to claim 7, wherein differing transmission times ($\Delta t_{trans}$) of different position measuring systems are compensated on the basis of transmission distances of different lengths over a predetermined transmission time ($\Delta t_{trans}$), which are geared to the maximum transmission time ($\Delta t_{trans}$) for the longest transmission distance, so that the same total time ($\Delta t_G$) results for all position measuring systems.

10. The method according to claim 3, wherein total times ($\Delta t_G$) with different lengths are predetermined for position data request signals (RQ, RQ') with different processing priorities and wherein the position data request signals with the highest processing priority are assigned the shortest total time ($\Delta t_G$).

11. A device for serial data transmission between a position measuring system (20) and a processing unit (10), in which digital words (DATA1 - DATA4) of a defined length are transmitted between the processing unit (10) and the position measuring system (20) and

   - the processing unit consists of a time determination unit (13), which determines a position signal in relation to the chronological position of the position data request signal (RQ) relative to the data word (DATA1) just transmitted, in the event of a position data request signal (RQ) arriving in the processing unit (10), in which a position control circuit requests current position data, during the transmission of a data word (DATA1) from the processing unit (10) to the position measuring system (20) and

- the position measuring system (20) is made up of a control unit (21), which processes the position signal transmitted by the processing unit (10), so that after a constant total time ($\Delta t_G$) following the arrival of the position data request signal (RQ), the current position data is recorded in the position measuring system (20).

12. The device according to claim 11, wherein the time difference ($\Delta t_J$) between the start of transmission of the data word (DATA1) and arrival of the position data request signal (RQ) acts as the position signal.

13. The device according to claim 12, wherein the time determination unit (13) in the processing unit (10) is in the form of a counter.

14. The device according to claim 12, wherein a time determination unit (23) is disposed at the position measuring system (20) end to determine the constant total time.

15. The device according to claim 14, wherein the time determination unit (23) in the position measuring system (20) is in the form of a counter.

16. The device according to claim 11, wherein the position measuring system (20) consists of a storage unit (22) for storing the position data currently recorded.

17. The device according to claim 11, wherein the control unit (21) is in the form of a processor.

18. The device according to claim 11, wherein the control unit (21) is in the form of a logic circuit.

**Revendications**

1. Procédé pour la transmission de données série entre un système de mesure de position et une unité de traitement, dans lequel des mots de données numériques (DATA1 - DATA4) de longueur définie sont transmis entre l'unité de traitement (10) et le système de mesure de position (20) et

   - dans le cas d'un signal de demande de données de position (RQ) arrivant dans l'unité de traitement (10), avec lequel un circuit de réglage de position demande des données de position actuelles, un signal de position concernant la position relative dans le temps du signal de demande de données de position (RQ) par rapport au mot de données (DATA1) précisément transmis est déterminé pendant la transmission d'un mot de données (DATA1) de l'unité de traitement (10) au système de mesure de position (20) et

   - le signal de position déterminé est transmis ensuite au système de mesure de position (20).

2. Procédé selon la revendication 1, la différence de temps ($\Delta t_J$) entre le début de la transmission du mot de données (DATA1) et l'arrivée du signal de demande de données de position (POS_RQ) étant déterminée du côté de l'unité de traitement (10) comme signal de position.

3. Procédé selon la revendication 1, le système de mesure de position (20) garantissant à l'aide du signal de position transmis que les données de position actuelles dans le système de mesure de position (20) sont enregistrées après un temps global défini ($\Delta t_G$) après l'arrivée du signal de demande de données de position (RQ).

4. Procédé selon la revendication 3, les données de position enregistrées étant mémorisées du côté du système de mesure de position (20).

5. Procédé selon les revendications 2 et 3, une instruction de demande de données de position (POS_RQ) étant transmise sous forme de mot de données numérique par unité de traitement (10) au système de mesure de position (20) après la transmission du mot de données (DATA1).

6. Procédé selon la revendication 5, la différence de temps ($\Delta t_J$) déterminée étant transmise par l'unité de traitement (10) sous forme de mot de données numérique au système de mesure de position (20) après la transmission de l'instruction de demande de données de position (POS_RQ).

7. Procédé selon la revendication 6, le temps global prédéfini ($\Delta t_G$) entre l'arrivée du signal de demande de données de position (RQ) et l'enregistrement des données de position actuelles dans le système de mesure de position (20) se composant par addition

   - du temps de transmission restant ($\Delta t_{rest}$) du mot de données (DATA1) précisément transmis,
   - du temps de transmission indispensable ($\Delta t_{trans}$) pour la transmission de l'instruction de demande de données de position (POS_RQ) et la transmission de la différence de temps ($\Delta t_J$),
   - du temps de traitement utilisé ($\Delta t_{cal}$) pour l'analyse de l'instruction de demande de données de position (POS_RQ) et de la différence de temps ($\Delta t_J$) transmise et
   - de la différence de temps ($\Delta t_J$) transmise.

8. Procédé selon la revendication 2, la différence de

temps ($\Delta t_J$) étant déterminée à l'aide d'un compteur, qui est réinitialisé à chaque fois au début de la transmission d'un mot de données numérique sur une valeur de compteur de démarrage définie.

9. Procédé selon la revendication 7, des temps de transmission ($\Delta t_{trans}$) éventuellement variables de différents systèmes de mesure de position étant compensés en raison de trajets de transmission de longueur différente sur un temps de transmission ($\Delta t_{trans}$) prédéfini, lequel est axé sur le temps de transmission maximum ($\Delta t_{trans}$) pour le trajet de transmission le plus long, de sorte qu'on obtient à nouveau le même temps global ($\Delta t_G$) pour tous les systèmes de mesure de position.

10. Procédé selon la revendication 3, des temps globaux ($\Delta t_G$) de longueur différente étant prédéfinis pour des signaux de demande de données de position (RQ, RQ') avec différentes priorités de traitement et le temps global le plus court ($\Delta t_G$) étant attribué aux signaux de demande de données de position avec une priorité de traitement maximale.

11. Dispositif pour la transmission de données série entre un système de mesure de position (20) et une unité de traitement (10), dans lequel une transmission de mots de données (DATA1 - DATA4) numériques de longueur définie intervient entre l'unité de traitement (10) et le système de mesure de position (20) et

- l'unité de traitement comporte une unité de détermination de temps (13), qui, dans le cas d'un signal de demande de données de position (RQ) arrivant dans l'unité de traitement (10), avec lequel un circuit de réglage de position demande des données de position actuelles, détermine un signal de position concernant la position relative dans le temps du signal de demande de données de position (RQ) par rapport au mot de données (DATA1) précisément transmis pendant la transmission d'un mot de données (DATA1) de l'unité de traitement (10) au système de mesure de position (20) et
- le système de mesure de position (20) comporte une unité de commande (21), qui traite le signal de position transmis par l'unité de traitement (10) en ce sens qu'un enregistrement des données de position actuelles dans le système de mesure de position (20) intervient après un temps global ($\Delta t_G$) constant après l'entrée du signal de demande de données de position (RQ).

12. Dispositif selon la revendication 11, la différence de temps ($\Delta t_J$) entre le début de la transmission du mot de données (DATA1) et l'arrivée du signal de demande de données de position (RQ) servant de signal de position.

13. Dispositif selon la revendication 12, l'unité de détermination de temps (13) étant conçue comme compteur du côté de l'unité de traitement (10).

14. Dispositif selon la revendication 12, une unité de détermination de temps (23) étant disposée du côté du système de mesure de position (20) pour la détermination du temps global constant.

15. Dispositif selon la revendication 14, l'unité de détermination de temps (23) étant conçue comme compteur du côté du système de mesure de position (20).

16. Dispositif selon la revendication 11, le système de mesure de position (20) comportant une unité de mémoire (22) pour le stockage des données de position actuellement saisies.

17. Dispositif selon la revendication 11, l'unité de commande (21) étant conçue comme processeur.

18. Dispositif selon la revendication 11, l'unité de commande (21) étant conçue comme circuit logique.

## FIG. 1a

NC ⟶ ENCODER

| DATA1 | POS_RQ | $\Delta t_J$ | DATA2 | DATA3 | DATA4 |

10 Bit

## FIG. 1b

RQ

$t_0$  $t_1$  $t_2 t_3$  $t_4$  $t_5$  $t$

$\Delta t_J$  $\Delta t_{rest}$  $\Delta t_{trans}$  $\Delta t_{cal}$  $\Delta t_J$

$\Delta t_G$

## FIG. 1c

RQ

$t_0$  $t_1$  $t_2 t_3$  $t_4 t_5$  $t$

$\Delta t_J$  $\Delta t_{rest}$  $\Delta t_{trans}$  $\Delta t_{cal}$  $\Delta t_J$

$\Delta t_G$

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19815647 A1